# FASCICULE DE BREVET EUROPEEN

(11) **EP 1 888 405 B1**
(45) Date de publication et mention de la délivrance du brevet: **28.09.2016**
(21) Numéro de dépôt: 06764738.8
(22) Date de dépôt: 06.06.2006
(51) Int. Cl.: B64D 11/00, B64D 11/06

(54) **MODULE DOUBLE POUR PASSAGER(S) D'AERONEF**
DOPPELMODUL FÜR FLUGGAST/FLUGGÄSTE EINES FLUGZEUGS
DOUBLE MODULE FOR PASSENGER(S) OF AN AIRCRAFT

(30) Priorité: 10.06.2005 FR 0505902
(43) Date de publication de la demande: 20.02.2008
(73) Titulaire: Airbus, 31700 Blagnac Cédex (FR)
(72) Inventeur: SAINT-JALMES, Bruno, F-31400 Toulouse (FR); REZAG, André, F-31200 Toulouse (FR); ZANEBONI, Jason, F-31700 Blagnac (FR)
(74) Mandataire: Santarelli
(86) Numéro de dépôt international: PCT/FR2006/001273
(87) Numéro de publication internationale: WO 2006/131636

(56) Documents cités:
- WO-A-2005/080196
- FR-A- 2 842 497
- FR-A- 2 843 730
- US-A- 2 309 665
- US-A1- 2005 012 363

## Description

La présente invention concerne un module double pour passager(s) d'aéronef.

La plupart des compagnies aériennes proposent à leurs passagers trois niveaux de confort pour voyager. Par niveau de confort croissant, il y a ainsi généralement dans un aéronef (moyen ou long courrier) une classe économique, une classe affaires et une première classe. Ces différentes classes ont des noms différents selon que l'on voyage avec une compagnie aérienne ou une autre.

Le plus souvent, dans une cabine d'aéronef, des sièges d'un premier type sont utilisés pour la première classe du côté du cockpit de l'aéronef, des sièges d'un second type sont utilisés pour la classe affaires, généralement juste dernière la première classe, et enfin des sièges d'un troisième type sont utilisés en classe économique vers le fond de l'aéronef. La configuration choisie pour un aéronef donné est le plus souvent figée. Pour les compagnies aériennes il est cependant intéressant de moduler la répartition entre le nombre de places assises proposées dans les trois classes. Il est ainsi connu de modifier la configuration intérieure d'un aéronef pour remplacer des sièges de première classe par des sièges de classe affaires ou inversement. Cette opération est très longue et nécessite une immobilisation très longue de l'ordre de cinq jours car il est alors nécessaire de démonter et de remonter des sièges et des équipements.

La présente invention a alors pour but de fournir des moyens permettant de réduire la durée d'immobilisation d'un aéronef lorsque une partie de sa classe affaires est convertie en première classe ou inversement.

A cet effet, l'invention propose un module pour passager(s) d'aéronef comportant :
- deux sièges disposés l'un à côté de l'autre et orientés dans le même sens, chacun de ces sièges étant un siège convertible en couchette,
- une paroi latérale entourant les deux sièges,
- une seule ouverture réalisée dans la paroi latérale pour permettre l'accès au module, cette ouverture étant disposée face aux sièges et en position médiane par rapport à ceux-ci, et
- une cloison destinée à réaliser une séparation entre les deux sièges, cette cloison étant déplaçable d'une première position dans laquelle elle réalise la séparation des deux sièges vers une seconde position rangée dans laquelle elle ne forme pas d'obstacle entre les deux sièges.

Un tel module peut recevoir deux passagers qui peuvent alors voyager aussi bien en position assise qu'en position couchée. Ceci correspond au standard de la plupart des compagnies aériennes pour le confort des classes affaires. Grâce à la configuration du module, celui-ci peut être aménagé différemment. Tout d'abord, la cloison peut être disposée de manière à ne plus créer de séparation entre les deux sièges. Le module peut alors recevoir deux passagers de classe affaires se connaissant et souhaitant se retrouver. Il peut aussi être envisagé de transformer un siège en couchette et de laisser l'autre siège dans sa position assise. L'intérieur du module forme alors un espace privatif pour un passager qui peut s'allonger ou s'asseoir. La couchette peut également être utilisée comme une banquette.

Afin d'être encore plus modulable, il est proposé que le module selon l'invention comporte en outre des éléments, tels des éléments en mousse, permettant de conformer l'espace intérieur du module. De tels éléments permettent de configurer l'espace à l'intérieur de la paroi latérale à souhait. Il est alors possible de modifier le module de telle sorte qu'un passager non averti ne se rende pas compte que le module réservé à un passager de première classe correspond à deux modules d'un passager de classe affaires. Dans cette forme de réalisation, les éléments utilisés permettent par exemple de transformer une couchette en une banquette avec dossier.

Avantageusement, un module selon l'invention comporte un espace de rangement destiné notamment à recevoir des éléments pour l'aménagement de l'espace intérieur du module. Cet espace de rangement est par exemple disposé sous les sièges. Une trappe réalisée dans la paroi latérale peut, selon la configuration de la cabine, permettre l'accès à l'espace de rangement.

Une forme de réalisation préférée de l'invention prévoit que la paroi latérale entourant les deux sièges délimite un espace sensiblement rectangulaire, les deux sièges occupant sensiblement toute la largeur de cet espace et étant disposés à une extrémité de celui-ci. Une telle forme et une telle disposition permettent d'optimiser l'espace dans une cabine d'aéronef et permettent a priori, pour une cabine donnée, de loger le plus grand nombre de passagers sans que le confort de ceux-ci n'en souffre.

La paroi latérale présente une ouverture disposée face aux sièges et en position médiane par rapport à ceux-ci. Dans ce cas, une même ouverture permet l'accès à deux sièges en classe affaires et permet l'accès au module de première classe. Cette disposition est avantageuse car elle évite d'avoir deux ouvertures dans la paroi latérale, une de ces ouvertures n'étant alors pas utile lorsque le module est destiné à un passager de première classe.

Une variante de réalisation prévoit que la cloison est par exemple une cloison coulissant entre une première position haute dans laquelle elle réalise la séparation entre les deux sièges et une seconde position basse dans laquelle elle est entièrement escamotée entre les deux sièges.

Selon une autre variante de réalisation, la cloison peut être une cloison démontable. Dans cette variante de réalisation, une réservation est avantageusement prévue pour recevoir la cloison lorsque celle-ci est démontée.

Un module pour passager(s) d'aéronef selon l'invention comporte de préférence des sièges tels que chaque siège présente un châssis fixe.- Ceci permet de limiter l'encombrement des sièges dans le module et donc de laisser plus de place au(x) passager(s). Avec un tel siège, on peut prévoir qu'un supplément de couchette vient coopérer avec le siège pour former une surface sensiblement plane permettant de recevoir un passager en position couchée. De tels sièges et suppléments de couchette sont par exemple décrits dans le document FR-2 860 194.

La présente invention concerne également une cabine d'aéronef et un aéronef caractérisés en ce qu'ils comportent au moins un module tel que décrit ci-dessus.

Le document FR 2 842 497 décrit toutes les caractéristiques du préambule de la revendication 1.

Des détails et avantages de la présente invention ressortiront mieux de la description qui suit, faite en référence aux dessins schématiques annexés sur lesquels :
La figure 1 est une vue en plan schématique d'une zone de cabine d'aéronef regroupant les premières classes et les classes affaires,
La figure 2 est une vue en perspective d'un module selon l'invention lorsqu'il est destiné à un espace de classe affaires, et
La figure 3 est un module selon l'invention lorsqu'il est destiné à un espace de première classe.

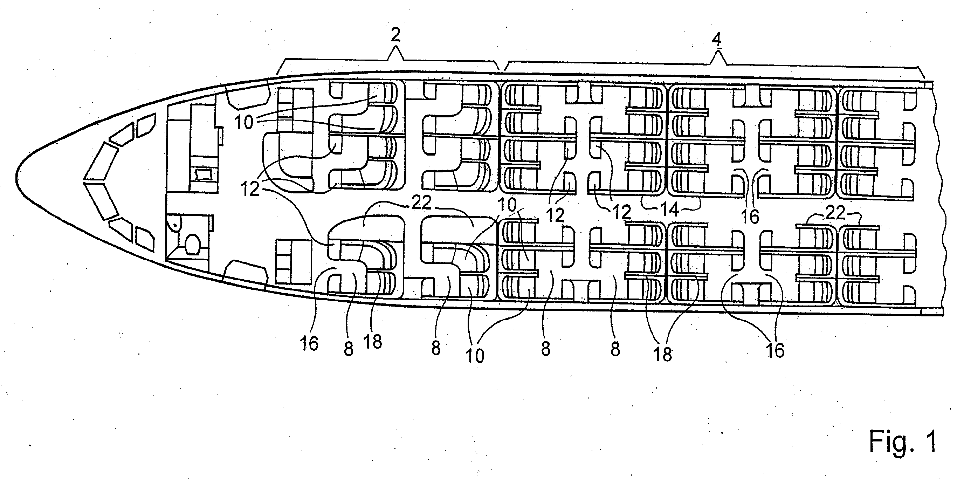

Sur la figure 1, on reconnaît une zone première classe 2 ainsi qu'une zone de classe affaires 4 dans une cabine d'aéronef.

Dans la cabine représentée sur la figure 1, la structure des sièges et modules utilisées dans la zone de première classe 2 est identique à celle des sièges et modules de la classe affaires 4. Seul l'aménagement des modules est différent.

L'élément de base utilisé ici pour l'aménagement des zones de première classe 2 et de classe affaires 4 est un module double 8 qui peut être aménagé pour accueillir soit un seul passager de première classe soit deux passagers en classe affaires. Un exemple de module de ce type est décrit ci-après en référence aux dessins schématiques annexés.

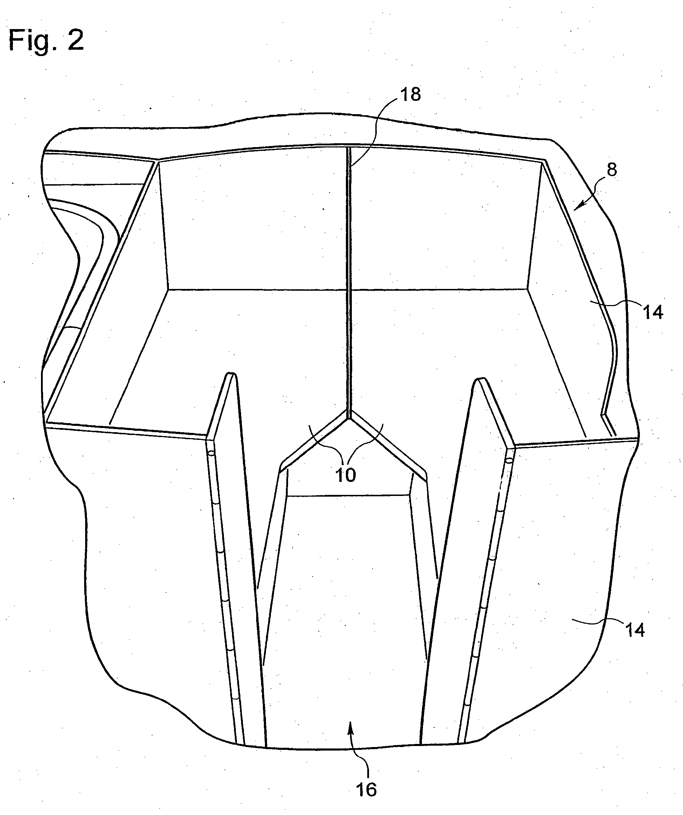

Dans la zone de classe affaires 4 de la figure 1, on reconnaît dans les modules doubles 8 la présence à chaque fois de deux sièges 10. Face à chacun de ces sièges 10, et à distance de ceux-ci, se trouve à chaque fois un équipement 12 qui peut être par exemple un coffre à bagages, une tablette, un repose-pieds ou encore un coffret intégrant par exemple un écran de télévision. De préférence, cet équipement 12 comporte une surface d'appui se trouvant sensiblement (à vingt centimètres près par exemple) à la même hauteur que l'assise du siège 10 correspondant. Ce siège est un siège convertible. La surface d'appui de l'équipement 12 vient alors coopérer avec le siège convertible et un éventuel supplément de couchette pour former une surface de couchage formant un lit pour le passager comme représenté sur la figure 2.

Chaque module double 8 destiné à recevoir un passager de première classe ou deux passagers de classe affaires est délimité par une paroi latérale 14. Cette dernière entoure à la fois les sièges par l'arrière et les équipements 12. Cette paroi latérale 14 peut être de hauteur sensiblement constante ou être par exemple plus haute du côté des sièges 10 que des équipements 12. A titre d'exemple non limitatif, on peut considérer par exemple que les parois latérales délimitant les modules doubles 8 ont une hauteur comprise entre 0,60 m et 1,50 m.

La paroi latérale 14 présente globalement une forme sensiblement rectangulaire. Les sièges 10 sont disposés à une extrémité du module 8 et occupent sensiblement toute la largeur du module. Les équipements 12 sont quant à eux de largeur moindre que les sièges. Ces équipements sont disposés dans les angles du module 8 du côté opposé aux sièges 10.

Une ouverture est prévue dans chaque paroi latérale 14 pour permettre l'accès aux sièges 10. Cette ouverture 16 est réalisée entre les équipements 12. Une porte, ou un portillon, peut éventuellement être prévue pour fermer chaque ouverture 16.

Chaque module double 8 représenté ici est sensiblement symétrique par rapport à un axe passant entre les deux sièges 10 et par le milieu de l'ouverture 16. Ce plan de symétrie est matérialisé par une cloison 18 disposée entre les deux sièges 10. Cette cloison 18 réalise une séparation entre les deux sièges de telle sorte que les deux passagers voyageant dans le module double lorsque celui-ci est aménagé en classe affaires puissent être isolés l'un de l'autre. L'espace privatif de chacun des passagers est ainsi préservé.

Cette cloison 18 est une cloison mobile. Dans sa première position, décrite ci-dessus, elle réalise une séparation entre les deux sièges 10 et transforme le module double 8 en deux modules simples. Toutefois, lorsque les deux passagers (en classe affaires) se connaissent et souhaitent être ensemble, cette cloison 18 prend alors une seconde position dans laquelle elle ne réalise plus cette séparation. Un mécanisme peut alors être prévu pour abaisser la cloison 18 et la faire disparaître entre les deux sièges 10. Il est également envisageable de démonter cette cloison. La cloison démontée peut alors par exemple prendre place dans une réservation (non représentée) réalisée dans l'épaisseur de la paroi latérale 14, par exemple à l'arrière des deux sièges 10.

Comme indiqué plus haut, les sièges 10 sont des sièges convertibles. Il s'agit de préférence de sièges tels ceux décrits dans le document FR-2 860 194. Il est fait ici référence à ce document en ce qui concerne la description des sièges utilisés ici ainsi qu'un éventuel supplément de couchette coopérant avec le siège pour former une surface plane pouvant accueillir un passager en position couchée. Les sièges décrits dans ce document présentent l'avantage d'avoir une masse peu élevée et de ne pas nécessiter la mise en place de moteurs volumineux pour passer de la position assise à la position convertie en couchette. De ce fait, un grand espace est disponible sous l'assise des sièges 10. Bien entendu, la présente invention peut être mise en oeuvre avec des sièges différents de ceux décrits dans la demande de brevet précitée mais la forme de réalisation de ces sièges est la forme de réalisation préférée ici.

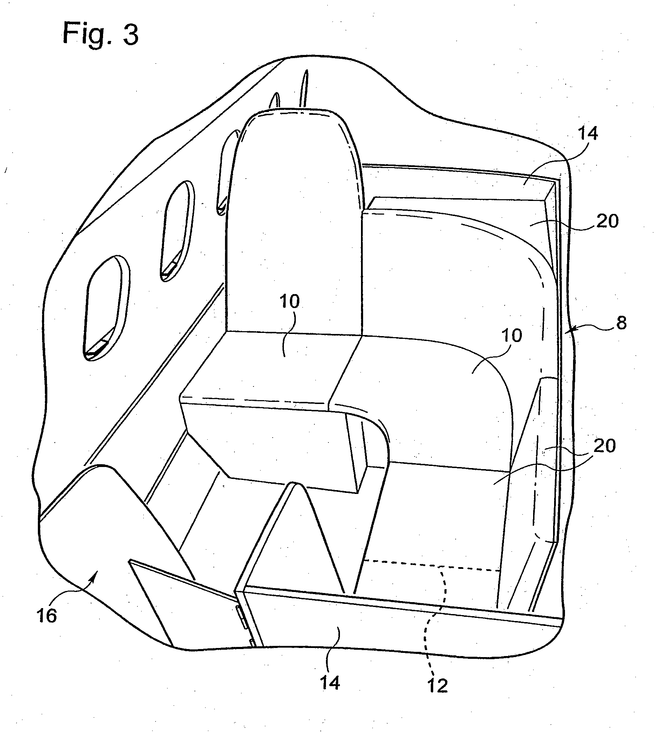

La figure 3 représente le même module que celui représenté sur la figure 2 lorsqu'il est configuré pour recevoir un passager de première classe. Dans cette configuration, la cloison 18 de séparation disparaît de manière à être escamotée entre les sièges 10 ou est démontée et placée dans une réservation prévue à cet effet.

Dans l'exemple de configuration représentée sur la figure 3, un siège 10 du module double 8 est en position assise tandis que l'autre siège est dans sa position convertie en lit. Le siège converti en lit est transformé en banquette à l'aide d'éléments en mousse 20 qui forment notamment le dossier de la banquette et d'éventuels compléments d'assise. Ces éléments en mousse 20 peuvent être maintenus à l'aide de bandes à crochets et boucles (connues sous la marque déposée Velcro), à l'aide de tétons encliquetables ou par tout autre moyen.

Dans une forme de réalisation avantageuse, tous les éléments en mousse et d'éventuels coussins sont logés dans l'espace disponible sous les sièges 10. L'accès à cet espace de rangement peut se faire par une trappe prévue à cet effet dans la paroi latérale 14 ou bien directement par l'avant du siège 10. Si ce dernier est équipé d'un repose-jambes, celui-ci est relevé et permet ainsi l'accès à l'espace de rangement. On peut également prévoir le rangement des éléments en mousse 20 dans les équipements 12. Cet espace de rangement peut être un espace très vaste et s'étendre d'un seul tenant sous les deux sièges 10 du module. Il peut ainsi recevoir des éléments en mousse 20 de grande taille.

Les aménagements montrés pour un module de première classe sont donnés à titre d'exemple non limitatif. En adaptant la forme (et le nombre) des éléments en mousse, il est possible de concevoir une quasi infinité d'aménagements différents.

Comme il ressort de la description qui précède, la transformation d'un module double 8 destiné à recevoir deux passagers en classe affaires en un module double destiné à recevoir un passager de première classe peut s'effectuer rapidement. Aucun élément structurel n'est à déplacer. Il convient uniquement d'incliner ou de redresser des sièges, de déplacer une cloison et aménager des éléments en mousse. Ces éléments sont de préférence disponibles dans le module lui-même ou peuvent être stockés dans un autre endroit de l'aéronef (dans la cabine ou même dans la soute).

Avec le concept présenté ci-dessus, il devient possible de transformer un espace de première classe en un espace de classe affaires en trois heures uniquement alors qu'une telle transformation nécessite généralement cinq jours dans les aéronefs de l'art antérieur. Il devient envisageable de changer au cours d'une étape la configuration de l'aéronef. D'un vol à l'autre, il est ainsi possible de modifier l'intérieur d'une cabine d'aéronef. Ceci est bien entendu très avantageux pour les compagnies aériennes qui peuvent ainsi adapter les aménagements intérieurs de la cabine pour chaque vol en fonction des réservations reçues. On augmente ainsi la rentabilité dans l'aéronef de l'espace dédié aux premières classes et aux classes affaires.

On remarque sur la figure 1 qu'en classe affaires il y a non seulement des modules doubles 8 tels ceux décrits ci-dessus mais également des modules simples 22. Ceci permet d'optimiser l'espace disponible dans la cabine de l'aéronef. L'exemple montré permet ainsi d'avoir sept passagers de front en classe affaires. Cela représente trois modules doubles 8 et un module 22 simple. Un tel module 22 simple correspond à la moitié d'un module double 8. On retrouve un tel module également dans le document FR-2 843 730, notamment sur la figure 14 de ce document, et dans la description correspondante. Lorsqu'une partie de l'espace de classe affaires 4 est transformée en espace de première classe, on retrouve alors, comme illustré sur la figure 1, trois modules doubles 8 permettant de faire voyager trois passagers de première classe de front. Les modules 22 simples, comme représentés sur le figure 1 au niveau de la zone première classe 2 sont alors recouverts et peuvent servir par exemple d'espace de rangement pour les bagages des voyageurs de la zone première classe 2.

La présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

## Revendications

1. Module (8) pour passager(s) d'aéronef comportant :
- deux sièges (10) disposés l'un à côté de l'autre et orientés dans le même sens, chacun de ces sièges (10) étant un siège convertible en couchette,
- une paroi latérale (14) entourant les deux sièges (10), et
- une cloison (18) destinée à réaliser une séparation entre les deux sièges (10), cette cloison (18) étant déplaçable, d'une première position dans laquelle elle réalise la séparation des deux sièges (10) vers une seconde position rangée dans laquelle elle ne forme pas d'obstacle entre les deux sièges (10),
**caractérisé en ce qu'**une seule ouverture (16) est réalisée dans la paroi latérale (14) pour permettre l'accès au module (8), cette ouverture étant disposée face aux sièges (10) et en position médiane par rapport à ceux-ci.

2. Module (8) pour passager(s) d'aéronef selon la revendication 1, **caractérisé en ce qu'**il comporte en outre des éléments (20), tels des éléments en mousse, permettant de conformer l'espace intérieur du module (8).

3. Module (8) pour passager(s) d'aéronef selon la revendication 2, **caractérisé en ce que** les éléments (20) permettent de transformer une couchette en une banquette avec dossier.

4. Module (8) pour passager(s) d'aéronef selon l'une des revendications 1 à 3, **caractérisé en ce qu'**il comporte un espace de rangement destiné à recevoir des éléments (20) pour l'aménagement de l'espace intérieur du module.

5. Module (8) pour passager(s) d'aéronef selon la revendication 4, **caractérisé en ce que** l'espace de rangement est disposé sous les sièges (10).

6. Module (8) pour passager(s) d'aéronef selon l'une des revendications 4 ou 5, **caractérisé en ce qu'**une trappe réalisée dans la paroi latérale (14) permet l'accès à l'espace de rangement.

7. Module (8) pour passager(s) d'aéronef selon l'une des revendications 1 à 6, **caractérisé en ce que** la paroi (14) entourant les deux sièges (10) délimite un espace sensiblement rectangulaire, les deux sièges (10) occupant sensiblement toute la largeur de cet espace et étant disposés à une extrémité de celui-ci.

8. Module (8) pour passager(s) d'aéronef selon l'une des revendications 1 à 7, **caractérisé en ce que** la cloison (18) est une cloison coulissant entre une première position haute dans laquelle elle réalise la séparation entre les deux sièges (10) et une seconde position basse dans laquelle elle est entièrement escamotée entre les deux sièges (10).

9. Module (8) pour passager(s) d'aéronef selon l'une des revendications 1 à 7, **caractérisé en ce que** la cloison (18) est une cloison démontable.

10. Module (8) pour passager(s) d'aéronef selon la revendication 9, **caractérisé en ce qu'**une réservation est prévue pour recevoir la cloison (18) lorsque celle-ci est démontée.

11. Module (8) pour passager(s) d'aéronef selon l'une des revendications 1 à 10, **caractérisé en ce que** chaque siège (10) présente un châssis fixe.

12. Module (8) pour passager(s) d'aéronef selon la revendication 11, **caractérisé en ce qu'**un supplément de couchette vient coopérer avec le siège (10) pour former une surface sensiblement plane permettant de recevoir un passager en position couchée.

13. Cabine d'aéronef, **caractérisée en ce qu'**elle comporte au moins un module (8) selon l'une des revendications 1 à 12.

14. Aéronef, **caractérisé en ce qu'**il comporte au moins un module (8) selon l'une des revendications 1 à 12.

## Patentansprüche

1. Modul (8) für Fluggast/Fluggäste eines Flugzeugs umfassend:
- zwei Sitze (10), die nebeneinander angeordnet und in derselben Richtung ausgerichtet sind, wobei jeder dieser Sitze (10) ein in eine Liege umwandelbarer Sitz ist,
- eine Seitenwand (14), die die beiden Sitze (10) umgibt, und
- eine Zwischenwand (18), die dazu bestimmt ist, eine Trennung zwischen den zwei Sitzen (10) zu realisieren, wobei diese Zwischenwand (18) von einer ersten Position, in der sie die Trennung der zwei Sitze (10) realisiert, hin zu einer zweiten verstauten Position, in der sie kein Hindernis zwischen den zwei Sitzen (10) bildet, bewegbar ist,
**dadurch gekennzeichnet, dass** nur eine Öffnung (16) in der Seitenwand (14) realisiert ist, um den Zugang zum Modul (8) zu gestatten, wobei diese Öffnung gegenüber den Sitzen (10) und bezogen auf diese in medianer Position angeordnet ist.

2. Modul (8) für Fluggast/Fluggäste eines Flugzeugs nach Anspruch 1, **dadurch gekennzeichnet, dass** es darüber hinaus Elemente (20), wie Schaumelemente, die es gestatten, den Innenraum des Moduls (8) anzupassen, aufweist.

3. Modul (8) für Fluggast/Fluggäste eines Flugzeugs nach Anspruch 2, **dadurch gekennzeichnet, dass** die Elemente (20) es gestatten, eine Liege in eine Bank mit Rückenlehne umzuwandeln.

4. Modul (8) für Fluggast/Fluggäste eines Flugzeugs nach einem der Ansprüche 1 bis 3, **dadurch gekennzeichnet, dass** es einen Verstauungsbereich, der dazu bestimmt ist, Elemente (20) für die Gestaltung des Innenraums des Moduls aufzunehmen, aufweist.

5. Modul (8) für Fluggast/Fluggäste eines Flugzeugs nach Anspruch 4, **dadurch gekennzeichnet, dass** der Verstauungsbereich unter den Sitzen (10) angeordnet ist.

6. Modul (8) für Fluggast/Fluggäste eines Flugzeugs nach einem der Ansprüche 4 oder 5, **dadurch gekennzeichnet, dass** eine in der Seitenwand (14) realisierte Klappe den Zugang zum Verstauungsbereich gestattet.

7. Modul (8) für Fluggast/Fluggäste eines Flugzeugs nach einem der Ansprüche 1 bis 6, **dadurch gekennzeichnet, dass** die Wand (14), die die zwei Sitze (10) umgibt, einen weitestgehend rechteckigen Raum begrenzt, wobei die zwei Sitze (10) weitestgehend die gesamte Breite dieses Raums einnehmen und an einem Ende dessen angeordnet sind.

8. Modul (8) für Fluggast/Fluggäste eines Flugzeugs nach einem der Ansprüche 1 bis 7, **dadurch gekennzeichnet, dass** die Zwischenwand (18) eine zwischen einer ersten oberen Position, in der sie die Trennung zwischen den zwei Sitzen (10) realisiert, und einer zweiten unteren Position, in der sie zwischen den zwei Sitzen (10) vollständig versenkt ist, verschiebbare Zwischenwand ist.

9. Modul (8) für Fluggast/Fluggäste eines Flugzeugs nach einem der Ansprüche 1 bis 7, **dadurch gekennzeichnet, dass** die Zwischenwand (18) eine demontierbare Zwischenwand ist.

10. Modul (8) für Fluggast/Fluggäste eines Flugzeugs nach Anspruch 9, **dadurch gekennzeichnet, dass** eine Aussparung vorgesehen ist, um die Zwischenwand (18) aufzunehmen, wenn diese demontiert ist.

11. Modul (8) für Fluggast/Fluggäste eines Flugzeugs nach einem der Ansprüche 1 bis 10, **dadurch gekennzeichnet, dass** jeder Sitz (10) ein festes Gestell aufweist.

12. Modul (8) für Fluggast/Fluggäste eines Flugzeugs nach Anspruch 11, **dadurch gekennzeichnet, dass** eine Liegenergänzung mit dem Sitz (10) zusammenwirkt, um eine weitestgehend ebene Fläche zu bilden, die es gestattet, einen Fluggast in Liegeposition aufzunehmen.

13. Flugzeugkabine, **dadurch gekennzeichnet, dass** sie mindestens ein Modul (8) nach einem der Ansprüche 1 bis 12 aufweist.

14. Flugzeug, **dadurch gekennzeichnet, dass** es mindestens ein Modul (8) nach einem der Ansprüche 1 bis 12 aufweist.

## Claims

1. Module (8) for aircraft passenger(s) comprising:
- two seats (10) arranged alongside one another and oriented in the same direction, each of these seats (10) being a seat that can be converted into a berth,
- a lateral wall (14) surrounding the two seats (10), and
- a partition (18) intended to produce a separation between the two seats (10), this partition (18) being able to be moved from a first position in which it produces the separation of the two seats (10) to a stowed-away second position in which it does not form an obstacle between the two seats (10),
**characterised in that** a single opening (16) is produced in the lateral wall (14) to allow access to the module (8), this opening being arranged facing the seats (10) and in the median position relative thereto.

2. Module (8) for aircraft passenger(s) according to claim 1, **characterised in that** it further comprises elements (20), such as foam elements, making it possible to shape the interior space of the module (8).

3. Module (8) for aircraft passenger(s) according to claim 2, **characterised in that** the elements (20) make it possible to convert a berth into a bench seat with backrest.

4. Module (8) for aircraft passenger(s) according to one of claims 1 to 3, **characterised in that** it comprises a stowage space intended to receive elements (20) for the arrangement of the interior space of the module.

5. Module (8) for aircraft passenger(s) according to claim 4, **characterised in that** the stowage space is arranged under the seats (10).

6. Module (8) for aircraft passenger(s) according to one of claims 4 or 5, **characterised in that** a hatch produced in the lateral wall (14) allows access to the stowage space.

7. Module (8) for aircraft passenger(s) according to one of claims 1 to 6, **characterised in that** the wall (14) surrounding the two seats (10) delimits a substantially rectangular space, the two seats (10) occupying substantially all the width of this space and being arranged at an end thereof.

8. Module (8) for aircraft passenger(s) according to one of claims 1 to 7, **characterised in that** the partition (18) is a partition that slides between a high first position in which it produces the separation between the two seats (10) and a low second position in which it is entirely retracted between the two seats (10).

9. Module (8) for aircraft passenger(s) according to one of claims 1 to 7, **characterised in that** the partition (18) is a detachable partition.

10. Module (8) for aircraft passenger(s) according to claim 9, **characterised in that** a reservation is provided to receive the partition (18) when it is detached.

11. Module (8) for aircraft passenger(s) according to one of claims 1 to 10, **characterised in that** each seat (10) has a fixed frame.

12. Module (8) for aircraft passenger(s) according to claim 11, **characterised in that** a berth supplement cooperates with the seat (10) to form a substantially flat surface making it possible to receive a passenger lying down.

13. Aircraft cabin, **characterised in that** it comprises at least one module (8) according to one of claims 1 to 12.

14. Aircraft, **characterised in that** it comprises at least one module (8) according to one of claims 1 to 12.
